# EUROPÄISCHE PATENTSCHRIFT

(11) **EP 0 949 411 B1**
(45) Veröffentlichungstag und Bekanntmachung des Hinweises auf die Patenterteilung: **13.08.2003**
(21) Anmeldenummer: 99104735.8
(22) Anmeldetag: 10.03.1999
(51) Int. Cl.: F02D 9/06, F02D 29/02, F02D 13/04

(54) **Verfahren zur Steuerung oder Regelung der Motorbremse eines Kraftfahrzeugs**
Method of controlling the engine brake of a vehicle
Procédé pour contrôler le frein moteur d'un véhicule

(30) Priorität: 08.04.1998 DE 19815711
(43) Veröffentlichungstag der Anmeldung: 13.10.1999
(73) Patentinhaber: DaimlerChrysler AG, 70567 Stuttgart (DE)
(72) Erfinder: Schmidt, Erwin, 73666 Baltmannsweiler (DE); Sumser, Siegfried, 70184 Stuttgart (DE)

(56) Entgegenhaltungen:
- EP-A- 0 640 750
- US-A- 5 088 348
- US-A- 5 505 671

## Beschreibung

Die Erfindung betrifft ein Verfahren zur Steuerung oder Regelung der Motorbremse eines Kraftfahrzeugs nach dem Oberbegriff des Anspruches 1.

Aus der Druckschrift US 5 088 348 ist ein Motorbremssystem für ein Kraftfahrzeug bekannt, das aus einem verschließbaren Ventil im Abgasstrang der Brennkraftmaschine und einem zugehörigen Ventil im Ansaugtrakt besteht. Um im Schubbetrieb Bremsleistung zu erzeugen und das Fahrzeug abzubremsen, kann das Ventil im Abgasstrang über ein elektrisch betätigbares Stellglied geschlossen werden kann, so daß im Abgasstrang ein Überdruck aufgebaut wird, der der Kolbenbewegung entgegenwirkt.

In dem Kraftfahrzeug ist ein Automatikgetriebe eingesetzt, das automatisch einen Schaltwechsel auslöst, sobald die Fahrzeuggeschwindigkeit einen vorgegebenen Wert unterschreitet und zugleich das Gaspedal unbeaufschlagt ist. Während des Schaltwechsels ist das Getriebe vom Motor entkoppelt, so daß über das Getriebe kein äußeres Abtriebsmoment auf den Motor übertragen wird und der Motor ohne entgegenstehendes Abtriebsmoment nur von der 3remsleistung der Motorbremse beaufschlagt wird. Um zu vermeiden, daß die Motordrehzahl der Brennkraftmaschine durch die Bremsleistung stark abfällt und ein Rückstoß auf das Getriebe erfolgt, wird in einer Steuerungsvorrichtung ein Steuerungssignal erzeugt, das dem Stellglied des Ventils im Abgasstrang zugeführt wird, woraufhin die Motorbremse während eines Schaltwechsels außer Betrieb gesetzt wird. Dadurch wird ein Abfallen der Motordrehzahl durch die Motorbremse verhindert, so daß beide Schaufeln des Wandlers des Automatikgetriebes etwa mit gleicher Drehzahl umlaufen.

Dieses System hat den Nachteil, daß aufgrund des eigendynamischen Verhaltens der Komponenten der Motorbremse eine präzise Einstellung des Zeitraums, während dem die Motorbremse außer Kraft gesetzt wird, nur unzureichend erreicht werden kann. Ein verfrühtes oder verspätetes Abschalten bzw. Wiederzuschalten der Motorbremse führt entweder zu einem unnötigen Bremsleistungsverlust oder zu einem unerwünschten starken Abfallen der Motordrehzahl.

Der Erfindung liegt das Problem zugrunde, mit geringem Aufwand die auf die Brennkraftmaschine wirkenden Momente im Motorbremsbetrieb des Fahrzeugs während eines Getriebe-Schaltvorgangs möglichst exakt beeinflussen zu können.

Dieses Problem wird erfindungsgemäß mit den Merkmalen des Anspruches 1 gelöst.

Die zusätzlich in den Brennraum eingespritzte Kraftstoffmenge erzeugt eine zusätzliche Motorleistung, die die Motorbremsleistung zumindest teilweise kompensiert, so daß ein Abfallen der Motordrehzahl während eines Schaltvorgangs weitgehend vermieden wird. Es wird verhindert, daß die auf die Brennkraftmaschine wirkende Motorbremse im Zeitpunkt des Schaltvorgangs, in dem die Getriebeabtriebswelle von der Kurbelwelle entkoppelt ist und folglich dem auf die Kurbelwelle wirkenden Bremsmoment kein Drehmoment des Getriebes entgegensteht, die Motordrehzahl stark reduziert, was bei Beendigung des Schaltvorgangs zu einer hohen Differenzdrehzahl mit daraus resultierenden Problemen beim Ankuppeln des Getriebes führen würde. Die zusätzliche Motorleistung wirkt der Motorbremsleistung entgegen, so daß Differenzdrehzahlen im Getriebestrang im wesentlichen vermieden, zumindest aber reduziert werden; auf die Brennkraftmaschine wirkende Antriebs- und Bremsmomente kompensieren sich im wesentlichen.

Das Verfahren kann sowohl bei Handschaltgetrieben als auch bei Automatikgetrieben eingesetzt werden. Bei Handschaltgetrieben werden die Drehzahlen der Kurbelwelle und der Getriebeantriebswelle und in der Folge die Drehzahlen der beiden zusammenwirkenden Kupplungsscheiben der Kupplung synchronisiert. Bei Automatikgetrieben werden die Drehzahlen der beiden Schaufeln des Drehmomentwandlers etwa gleich hoch gehalten.

Zweckmäßig ist der Motoreinspritzung eine Differenzdrehzahlregelung unterlegt, die die zusätzlich eingespritzte Kraftstoffmenge vollelektronisch in Abhängigkeit der Drehzahldifferenz zwischen Motor und Getriebe festlegt. Die Differenzdrehzahlregelung kann sowohl bei Handschaltgetrieben als auch bei Automatikgetrieben eingesetzt werden.

In bevorzugter Weiterbildung weist die Brennkraftmaschine einen Abgasturbolader mit variabler Turbinengeometrie zur Veränderung des Turbinenquerschnitts auf. Die Turbinengeometrie ist in eine Staustellung überführbar, in der der Strömungsquerschnitt der Turbine bzw. des Abgaskanals reduziert ist und ein hoher Abgasgegendruck im Leitungsabschnitt zwischen den Zylindern und dem Abgasturbolader aufgebaut wird. Je nach Bauart des eingesetzten Abgasturboladers besteht die variable Turbinengeometrie aus Drehschaufeln, einem axial verschieblichen Turbinenleitgitter oder Klappenturbinen, die mehrere zum Turbinenrad führende Abgasfluten aufweisen, welche mittels Klappen versperrt werden können. Das Abgas strömt mit hoher Geschwindigkeit durch die Kanäle zwischen den Leitschaufeln der Turbine und beaufschlagt das Turbinenrad, woraufhin der Verdichter im Ansaugtrakt einen Überdruck aufbaut. Dadurch wird der Zylinder eingangsseitig mit erhöhtem Ladedruck beaufschlagt, ausgangsseitig liegt zwischen dem Zylinderauslaß und dem Abgasturbolader ein Überdruck an, der dem Abblasen der im Zylinder verdichteten Luft über Bremsventile in den Abgasstrang hinein entgegenwirkt. Im Bremsbetrieb muß der Kolben im Verdichtungshub Kompressionsarbeit gegen den hohen Überdruck im Abgasstrang verrichten, wodurch eine starke Bremswirkung erreicht wird.

Während des Schaltvorgangs wird der maßgebende Querschnitt vor dem Turbinenrad durch Verstellen der Turbinengeometrie und/oder einer Abblasevorrichtung mit einem Abblaseventil erweitert, wodurch der Überdruck im Leitungsabschnitt zwischen dem Zylinderauslaß und der Turbine abgebaut und die Motorbremsleistung reduziert wird. In Kombination mit der zusätzlich eingespritzten Kraftstoffmenge wird einerseits durch den Abbau des Abgasgegendrucks eine aktive Rücknahme des auf den Motor wirkenden Bremsmoments und andererseits durch die zusätzliche Motorleistung ein zusätzliches Antriebsmoment erzeugt.

Das erfindungsgemäße Verfahren kann auch mit einer Betätigung von Bremsventilen am Zylinderausgang kombiniert werden, die üblicherweise im Motorbremsbetrieb während der Kompressionsphase und/oder der Expansionsphase offen sind, um ein Abblasen des verdichteten Brennrauminhalts in den Abgastrakt hinein zu ermöglichen. Die Bremsventile werden während des Schaltvorgangs geschlossen, wodurch ein Abblasen und damit verbundene Strömungsverluste unterbunden werden. Durch das Schließen der Bremsventile wirkt auf den Motor nur noch das Schleppmoment des aktuell herrschenden Aufladungsgrads, verbunden mit einem deutlich reduzierten Abbremsmoment auf die Kurbelwelle.

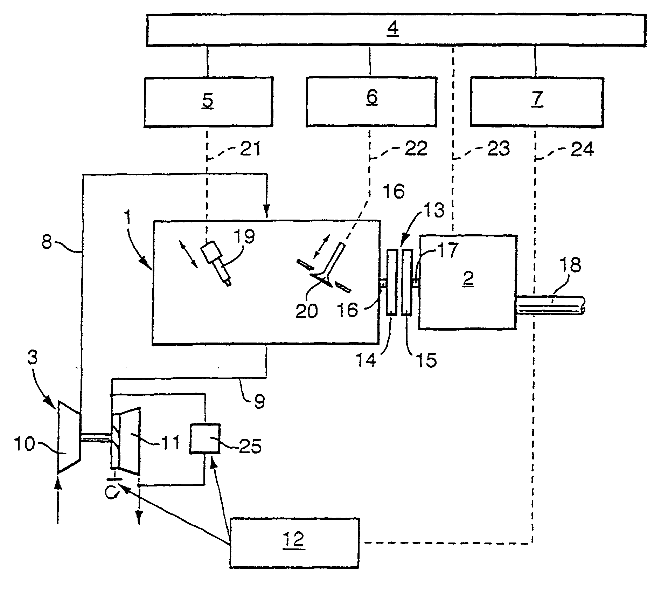

Weitere Vorteile und zweckmäßige Ausführungsformen sind den weiteren Ansprüchen, der Figurenbeschreibung und der Zeichnung zu entnehmen, die eine schematische Darstellung einer Regelung und Steuerung einer Brennkraftmaschine mit Handschaltgetriebe und Abgasturbolader zeigt.

Die Brennkraftmaschine 1 in einem Kraftfahrzeug, beispielsweise eine Diesel-Brennkraftmaschine in einem Nutzfahrzeug, weist einen Abgasturbolader 3 auf, der mit einer variablen, verstellbaren Turbinengeometrie ausgestattet ist. Bei Axialschieber- oder Klappenturbinen ist eine Abblasevorrichtung 25 mit einem regelbaren Ventil vorgesehen. Der Abgasturbolader 3 besteht aus einem im Ansaugtrakt 8 der Brennkraftmaschine angeordneten Verdichter 10 zur Erzeugung eines erhöhten Ladedrucks am Zylindereinlaß und einer Turbine 11 im Abgasstrang 9, die vom Abgasstrom der Brennkraftmaschine angetrieben wird und mit variabler Turbinengeometrie und gegebenenfalls mit der Abblasevorrichtung 25 zur veränderlichen Einstellung des Strömungsquerschnitts versehen ist. Die variable Turbinengeometrie kann durch Drehschaufeln, durch ein axial verschiebliches Leitgitter oder durch sonstige Varioturbinentypen realisiert sein, beispielsweise durch mehrere zum Turbinenrad weisende Fluten, die über Klappen abgesperrt werden können. Die variable Turbinengeometrie und/oder die Abblasevorrichtung 25 werden über ein Stellelement 12 auf den gewünschten Strömungsquerschnitt eingestellt.

Der Brennkraftmaschine 1 ist ein Getriebe 2 nachgeschaltet, das als Handschaltgetriebe ausgelegt ist und über eine Kupplung 13 mit der Kurbelwelle 16 der Brennkraftmaschine verbunden ist. Eine erste Kupplungsscheibe 14 der Kupplung 13 ist drehfest mit der Kurbelwelle 16 verbunden, eine zweite Kupplungsscheibe 15 ist drehfest an eine Getriebeantriebswelle 17 des Getriebes 2 gekoppelt. Das im Motorbetrieb erzeugte Antriebsmoment wird über die Kurbelwelle 16 und die Getriebeantriebswelle 17 auf eine Getriebeabtriebswelle 18 übertragen. Umgekehrt wirkt im Motorbremsbetrieb das Bremsmoment des Motors dem Getriebeabtriebsmoment an der Getriebeabtriebswelle 18 entgegen.

Dem Fahrzeug ist eine Motorregelung und -steuerung 4 zur Regelung und Steuerung der Fahr- und Betriebszustände der Brennkraftmaschine 1, des Abgasturboladers 3 und gegebenenfalls des Getriebes 2 unterlagert. Der Motorregelung und -steuerung 4 sind mehrere Verarbeitungseinheiten 5, 6, 7 zugeordnet, jeweils eine für die Regelung und Steuerung von Einspritzdüsen 19, für Bremsventile 20, über die die Zylinder der Brennkraftmaschine zusätzlich zu den Auslaßventilen mit dem Abgasstrang 9 kommunizieren, und für das Stellelement 12 des Abgasturboladers 3. In der Motorregelung und -steuerung 4 mit den Verarbeitungseinheiten 5, 6, 7 werden in Abhängigkeit von Eingangssignalen, die Parameter oder Betriebszustände des Fahrzeugs repräsentieren, Steuersignale erzeugt, die über Signalleitungen 21, 23, 24 zur Beaufschlagung der jeweiligen Fahrzeugkomponenten bzw. ihrer zugehörigen Stellelemente übertragen werden. Die Verarbeitungseinheit 5 der Motorregelung und -steuerung 4 beinhaltet eine Differenzdrehzahlregelung für eine in Abhängigkeit der Differenzdrehzahl zwischen Motor und Getriebe geregelte Kraftstoffeinspritzung.

Bei Betätigung des Kupplungspedals werden die Kupplungsscheiben 14, 15 der Kupplung 13 getrennt. Im Motorbremsbetrieb erhält die Motorregelung und -steuerung 4 über eine Signalleitung 23, die das Getriebe 2 mit der Motorregelung und -steuerung 4 verbindet, als Eingangssignal die Information, daß ein Schaltwechsel eingeleitet wurde, woraufhin die Differenzdrehzahlregelung in der Verarbeitungseinheit 5 aktiviert wird. Ebenfalls über die Signalleitung 23 oder auch über weitere, nicht dargestellte Signalleitungen werden als Eingangssignale die Drehzahlen der Kurbelwelle 16 und der Getriebeantriebswelle 17 der Motorregelung und -steuerung 4 zugeführt. Aus der Differenz der Drehzahlen ermittelt die Verarbeitungseinheit 5 gemäß einem unterlegten Regelgesetz und gegebenenfalls in Abhängigkeit weiterer Parameter und Betriebszustände ein Steuersignal, das über die Signalleitung 21 den Einspritzdüsen 19 zugeführt wird und die Menge einzuspritzenden Kraftstoffs während des Gangwechsels in der Art und Weise festlegt, daß die Drehzahlen der Kurbelwelle 16 und der Getriebeantriebswelle 17 schnell angeglichen werden. Nach ausgeführtem Gangwechsel wird die Kupplung 13 wieder verriegelt.

Die Kraftstoffeinspritzung während eines Gangwechsels kann zusätzlich zu einer auch im Motorbremsbetrieb eingespritzten minimalen Kraftstoffmenge erfolgen. Es kann aber auch zweckmäßig sein, im Motorbremsbetrieb bei eingelegtem Gang keinen Kraftstoff zuzuführen und lediglich während der Dauer des Schaltvorganges Kraftstoff zur Kompensation des Bremsmoments einzuspritzen.

Durch die Drehzahlangleichung wird erreicht, daß auch bei hohen Motorbremsleistungen bei einer Entkopplung des Motors vom Getriebe und einem damit verbundenen Wegfall der Übertragung des äußeren Getriebeabtriebsmoments auf den Motor die Kurbelwellendrehzahl auf dem Niveau der Getriebedrehzahl gehalten bzw. auf dieses Niveau gebracht wird, so daß nach Beendigung des Schaltwechsels ein problemloses Ankuppeln möglich ist.

Gemäß einer weiteren Ausführung wird nach dem Einleiten des Schaltvorgangs in der zweiten Verarbeitungseinheit 6 ein Steuersignal erzeugt, das über die Signalleitung 22 Stellgliedern der Bremsventile 20 zugeführt wird und die Bremsventile 20 schließt. In Schließstellung der Bremsventile 20 wird ein Abblasen des Brennrauminhalts in den Abgasstrang 9 unterbunden; die Motorbremsleistung ist reduziert. Nach Beendigung des Schaltvorgangs werden die Bremsventile 20 wieder geschlossen.

Als Bremsventile können von den Auslaßventilen getrennt ausgebildete Dekompressionsventile verwendet werden, über die die Zylinder mit dem Abgasstrang kommunizieren. Es kann aber auch zweckmäßig sein, als Bremsventile die Auslaßventile selbst zu verwenden, indem abweichend vom Öffnungszyklus des befeuerten Betriebs die Auslaßventile kontinuierlich während des Schaltvorgangs im Motorbremsbetrieb geöffnet werden.

In der dritten Verarbeitungseinheit 7 wird ein Steuersignal erzeugt, das herangezogen wird, um beim Schaltvorgang den maßgebenden Strömungsquerschnitt vor dem Turbinenrad zu erweitern, so daß der Abgasgegendruck reduziert wird. Das Steuersignal wird über die Signalleitung 24 dem Stellelement 12 zur Einstellung des Strömungsquerschnitts in der Turbine 11 und/oder der Abblasevorrichtung 25 des Abgasturbolader 3 zugeführt. Die variable Turbinengeometrie des Abgasturboladers 3 wird, ausgehend vom engsten Turbinenquerschnitt, in eine Öffnungsstellung mit erweitertem Querschnitt verstellt bzw. es wird der Abblasequerschnitt geöffnet, woraufhin der Abgasgegendruck und der Ladedruck reduziert werden und die Bremsleistung abnimmt. Nach Abschluß des Schaltvorgangs wird die variable Turbinengeometrie wieder in eine Stellung mit reduziertem Turbinenquerschnitt zurückversetzt bzw. die Abblasevorrichtung geschlossen, um eine höhere Bremsleistung zu ermöglichen.

Die drei im Motorbremsbetrieb einsetzbaren Methoden Kraftstoffeinspritzung, Betätigung der Bremsventile und Öffnung des Turbinenquerschnitts und/oder der Abblasevorrichtung im Abgasturbolader können unabhängig voneinander jeweils einzeln oder in beliebiger Kombination ausgeführt werden. Es ist insbesondere möglich, jeweils zwei oder alle drei Methoden zu kombinieren. Gemäß einer bevorzugten Ausführung gestaltet sich der Ablauf in der Schaltphase unter Verwendung aller drei Methoden wie folgt:

Im Motorbremsbetrieb werden mit Betätigung des Kupplungspedals die Kupplungsscheiben 14, 15 getrennt. Simultan zur Trennung der Kupplungsscheiben wird der maßgebende Querschnitt vor dem Turbinenrad durch Verstellen der variablen Turbinengeometrie erweitert und/oder die Abblasevorrichtung geöffnet, beispielsweise durch Öffnen der Turbinenleitgitter bzw. des Abblasequerschnitts, und es werden gleichzeitig die Bremsventile geschlossen. Zudem erfolgt über die differenzdrehzahlgeregelte Kraftstoffeinspritzung eine schnelle Angleichung der Motordrehzahl an die Drehzahl des Getriebes. Nach ausgeführtem Gangwechsel wird die variable Turbinengeometrie und gegebenenfalls die Abblasevorrichtung geregelt wieder geschlossen, die Bremsventile werden in den dafür vorgesehenen Kurbelwinkelphasen wieder geöffnet. Nach Verriegelung der Kupplung kann im Motorbremsbetrieb zunächst weiterhin zusätzlich Kraftstoff eingespritzt werden, damit über die zusätzlich erzeugte Motorleistung der Abgasgegendruck und der Ladedruck über den Abgasturbolader so weit erhöht werden, bis die Soll-Bremsleistung erreicht wird.

Das erfindungsgemäße Verfahren kann im Motorbremsbetrieb auch bei Verwendung von Automatikgetrieben eingesetzt werden. In diesem Fall werden über die Kraftstoffeinspritzung die Drehzahlen der beiden Schaufeln des Drehmomentwandlers angeglichen.

Die Einstellung und Festlegung der Kraftstoffeinspritzung, der Betätigung der Bremsventile und der Erweiterung des Turbinenquerschnitts bzw. des Querschnitts des Abblaseventils können mittels einer Regelung und/oder einer Steuerung erfolgen. Die Differenzdrehzahlregelung kann für alle drei Methoden eingesetzt werden.

## Patentansprüche

1. Verfahren zur Steuerung oder Regelung der Motorbremse eines Kraftfahrzeugs, bei dem im Schubbetrieb während eines Getriebe-Schaltvorgangs das auf die Brennkraftmaschine wirkende resultierende Bremsmoment reduziert wird,
**dadurch gekennzeichnet,**
**daß** während des Schaltvorgangs
- der maßgebende Querschnitt vor dem Turbinenrad eines Abgasturboladers mit variabler Turbinengeometrie erweitert wird,
- Bremsventile (20) am Zylinderausgang der Brennkraftmaschine geschlossen werden
- und die eingespritzte Kraftstoffmenge unter Einsatz einer Differenzdrehzahlregelung soweit erhöht wird, bis die Motordrehzahl und die Getriebedrehzahl synchronisiert sind.

2. Verfahren nach Anspruch 1,
**dadurch gekennzeichnet,**
**daß** bei Verwendung eines Handschaltgetriebes eine Differenzdrehzahlregelung zur Angleichung der Kurbelwellendrehzahl an die Drehzahl der Getriebeantriebswelle eingesetzt wird.

3. Verfahren nach Anspruch 1,
**dadurch gekennzeichnet,**
**daß** bei Verwendung eines Automatikgetriebes eine Differenzdrehzahlregelung zur Angleichung der Drehzahlen der beiden Schaufeln des Wandlers des Automatikgetriebes eingesetzt wird.

4. Verfahren nach einem der Ansprüche 1 bis 3,
**dadurch gekennzeichnet,**
**daß** während des Schaltvorgangs der Abblasequerschnitt einer Abblasevorrichtung (25) am Abgasturbolader (3) geöffnet wird.

## Claims

1. Process for controlling or regulating the engine brake of a motor vehicle, in which, in thrust operation during a gear change process, the resulting braking moment acting on the combustion engine is reduced,
**characterised in that**
during the gear change process
- the effective cross-section ahead of the turbine wheel of an exhaust gas turbocharger with variable turbine geometry is enlarged,
- braking valves (20) at the cylinder outlet of the combustion engine are closed,
- and by means of a differential speed control, the quantity of fuel injected is increased until the engine speed and the transmission speed are synchronised.

2. Process according to Claim 1,
**characterised in that**
when a manual gear shift is used, a differential speed control is used to equalise the crankshaft rotation speed and the rotation speed of the transmission driveshaft.

3. Process according to Claim 1,
**characterised in that**
when an automatic transmission is used, a differential speed control is used to equalise the speeds of the two blades of the converter of the automatic transmission.

4. Process according to any of Claims 1 to 3,
**characterised in that**
during the gear change process, the gas release cross-section of a blow-off device (25) on the exhaust gas turbocharger (3) is opened.

## Revendications

1. Procédé pour commander ou réguler le frein moteur d'un véhicule automobile, dans lequel on réduit le couple de freinage résultant agissant sur le moteur à combustion interne pendant une opération de changement de vitesse de la boîte de vitesses en propulsion, **caractérisé en ce que** pendant l'opération de changement de vitesses
- la section transversale déterminante en avant du rotor de turbine d'un turbocompresseur à gaz d'échappement à turbine de géométrie variable est élargie,
- des valves de freinage (20) à la sortie des cylindres du moteur à combustion interne sont fermées, et
- la quantité de carburant injectée est augmentée, en utilisant une régulation à vitesse de rotation différentielle si loin que la vitesse de rotation du moteur et la vitesse de rotation de la boîte de vitesses sont synchronisées.

2. Procédé selon la revendication 1, **caractérisé en ce que** lors de l'utilisation d'une boîte de vitesses manuelle, on utilise une régulation à vitesse de rotation différentielle pour adapter la vitesse de rotation du vilebrequin à la vitesse de rotation de l'arbre d'entraînement de la boîte de vitesses.

3. Procédé selon la revendication 1, **caractérisé en ce que** lors de l'utilisation d'une boîte automatique, on utilise une régulation à vitesse de rotation différentielle pour adapter les vitesses de rotation des deux aubes du convertisseur de la boîte automatique.

4. Procédé selon l'une des revendications 1 à 3, **caractérisé en ce que** pendant l'opération de changement de vitesses, on ouvre la section d'évacuation d'un dispositif d'évacuation (25) vers le turbocompresseur à gaz d'échappement (3).
